# EUROPEAN PATENT SPECIFICATION

(11) **EP 1 643 196 B1**
(45) Date of publication and mention of the grant of the patent: **27.02.2008**
(21) Application number: 05106939.1
(22) Date of filing: 27.07.2005
(51) Int. Cl.: F25B 13/00

(54) **Air conditioner**
Klimaanlage
Conditioneur d'air

(30) Priority: 27.09.2004 JP 2004280125
(43) Date of publication of application: 05.04.2006
(73) Proprietor: SAMSUNG ELECTRONICS CO., LTD., Suwon-si, Gyeonggi-do (KR)
(72) Inventor: JUNG, Gyoo Ha, Suwon-si, Gyeonggi-do (KR); KIM, Woo Hyun, Seoul (KR); PARK, Moon Soo, Anyang-si, Gyeonggi-do (KR); SONG, Myung Seob, Gyeonggi-do (KR); TAKASHI, Kaneko, Samsung Yokohama R. I. Co.Ltd., Minoo-shi, Osaka-bu Osaka (JP); MICHIYOSHI, Kusaka, Samsung Yokohama R. I. Co.Ltd., Minoo-shi, Osaka-bu Osaka (JP)
(74) Representative: Grey, Ian Michael

(56) References cited:
- EP-A- 1 371 914
- US-A- 5 009 077
- US-A- 5 065 588
- PATENT ABSTRACTS OF JAPAN vol. 015, no. 358 (M-1156), 10 September 1991 (1991-09-10) & JP 03 140757 A (HITACHI LTD), 14 June 1991 (1991-06-14)

## Description

The present invention relates to a multiple room air conditioner that is capable of performing simultaneous cooling and heating operation.

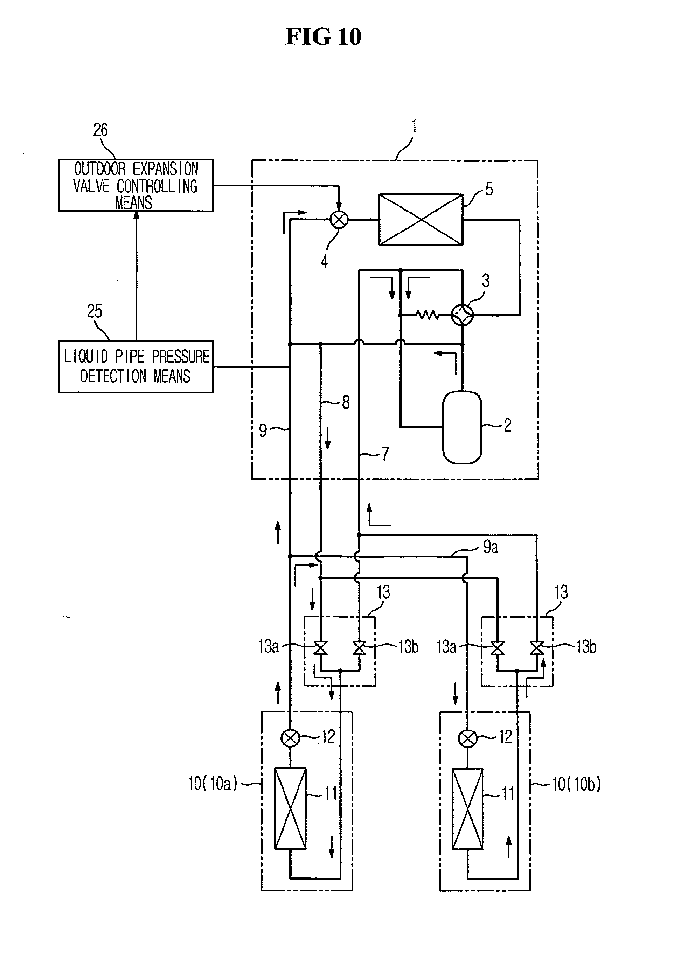

Multiple room air conditioners are well known. One example is disclosed in document EP-A-1371914. Another example is disclosed in Japanese Patent No. 3356485, which provides a multiple room air conditioner comprising an outdoor unit and a plurality of indoor units. The outdoor unit is connected to the indoor units via three pipes, i.e., a high-pressure gas pipe, a low-pressure gas pipe and a middle-pressure liquid pipe, whereby a cooling cycle performing simultaneous cooling and heating operation is accomplished. As shown in Figure 10, the conventional multiple room air conditioner comprises an outdoor unit 1, a plurality (two in the drawing) of indoor units 10, and a cooling/heating operation mode switching unit 13 disposed between the outdoor unit 1 and the indoor units 10. The outdoor unit 1 comprises a compressor 2, a four-way valve 3, an outdoor expansion valve 4 and an outdoor heat exchanger 5. To the outdoor unit 1 are connected first, second and third pipes 7, 8 and 9.

Each of the indoor units 10 (10a and 10b) comprises an indoor heat exchanger 11 and an indoor expansion valve 12. The indoor units 10 (10a and 10b) are connected to the outdoor unit 1 via the cooling/heating operation mode switching unit 13 and the first, second and third pipes 7, 8 and 9.

The air conditioner with the above-stated construction is operated in simultaneous cooling and heating operation mode in which one of the indoor units 10 performs a cooling operation and the other performs a heating operation. For example, arrows shown in the drawing indicate refrigerant flow when the air conditioner is operated in simultaneous cooling and heating operation mode, and heating capacity is greater than cooling capacity.

High-pressure gas refrigerant discharged from the compressor 2 flows into one of the indoor units 10a through the second pipe 8 and an opened valve 13a of the cooling/heating operation mode switching unit 13. The indoor heat exchanger 11 performs heat exchange between the high-pressure gas refrigerant and indoor air, and therefore, the interior of a room is heated. At this time, the refrigerant is condensed into middle-pressure liquid refrigerant, which flows through the third pipe 9. Some of the middle-pressure liquid refrigerant flows into the other indoor unit 10b through a branch pipe 9a diverging from the third pipe 9. The refrigerant is decompressed by the indoor expansion valve 12, and is then evaporated by the indoor heat exchanger 11, and therefore, the interior of another room is cooled. After passing through the indoor heat exchanger 11, the refrigerant is changed into low-pressure gas refrigerant, which flows into the outdoor unit 1 through the opened valve 13b of the cooling/heating operation mode switching unit 13 and the first pipe 7.

The remainder of the middle-pressure liquid refrigerant flowing through the third pipe 9 is decompressed by the outdoor expansion valve 4 of the outdoor unit 1, and is then introduced into the outdoor heat exchanger 5 where heat exchange between the refrigerant and air is performed. Subsequently, the refrigerant passes through the four-way valve 3, and then joins the low-pressure gas refrigerant introduced into the first pipe 7 from the other indoor unit 10b. The confluent refrigerant flows to the inlet of the compressor 2.

The multiple room air conditioner further comprises: liquid pipe pressure detection means 25 to detect the pressure of the liquid refrigerant flowing through the third pipe 9; and outdoor expansion valve controlling means 26 to control the opening level of the outdoor expansion valve 4 to a target level such that the outdoor expansion valve 4 is opened when the pressure of the liquid refrigerant flowing through the third pipe 9 is increased, and the opening level of the outdoor expansion valve 4 is decreased when the pressure of the liquid refrigerant flowing through the third pipe 9 is decreased. Consequently, the pressure of the liquid refrigerant flowing through the third pipe 9 is maintained within predetermined ranges, and therefore, the ratio of the amount of the middle-pressure liquid refrigerant diverging to the outdoor unit side and the other indoor unit side through the third pipe 9 is properly controlled.

However, the conventional multiple room air conditioner has the following problems.

A sensor, such as a pressure sensor or a temperature sensor, is necessary as the liquid pipe pressure detection means 25 to detect the pressure of the liquid refrigerant flowing through the third pipe 9. When the outdoor expansion valve 4 is set to form a heating circuit, the opening level of the outdoor expansion valve 4 is generally controlled such that the liquid refrigerant of the two-phase refrigerant, i.e., the gas and liquid refrigerant, passing through the outdoor heat exchanger 5 downstream of the outdoor expansion valve is evaporated. However, the opening level of the outdoor expansion valve 4 is controlled based on the value detected by the liquid pipe pressure detection means 25, and therefore, it is difficult to control overheating level of the outdoor heat exchanger 5. Consequently, performance and reliability of the multiple room air conditioner are deteriorated.

When the opening level of the outdoor expansion valve 4 is excessively decreased in the case that a receive tank is connected to the outdoor expansion valve 4 opposite to the outdoor heat exchanger 5, the flow of the refrigerant is interrupted by the outdoor expansion valve 4, and therefore, the liquid refrigerant is accumulated in the receiver tank. As a result, the amount of refrigerant circulating in the system becomes insufficient, and therefore, the compressor is not properly operated due to decrease of the suction pressure or increase of the discharge temperature, reliability of the system is lowered, and the overall performance of the system is deteriorated.

Therefore, it is an aspect of the invention to provide a multiple room air conditioner that does not require a sensor to detect the pressure of liquid refrigerant flowing through a liquid pipe, thereby improving reliability of operation, and prevents shortage of refrigerant circulating in the air conditioner when a receiver tank is provided in the air conditioner.

It is known to provide an air conditioner comprising an outdoor unit, a plurality of indoor units and an operation mode switching unit for controlling the flow of refrigerant through each indoor unit to enable simultaneous heating and cooling by selected indoor units, wherein high pressure refrigerant flows via a high pressure flow path from the outdoor unit to those indoor units selected to perform a heating operation and subsequently via a liquid flow path back into the outdoor unit, a portion of the refrigerant that has passed through said indoor units to perform a heating operation being diverted from the liquid flow path to those indoor units that have been selected to perform a cooling operation before flowing back into the outdoor unit via a low-pressure flow path.

An air conditioner according to the invention is characterised in that a bypass flow path between the high pressure flow path and the liquid flow path for the flow of high pressure refrigerant therethrough to increase the pressure of refrigerant flowing back into the outdoor unit via the liquid flow path that has not been diverted to the indoor units that have been selected to perform a cooling operation, and thereby increase the flow rate of refrigerant diverted from the liquid flow path to the indoor units that have been selected to perform a cooling operation.

In accordance with another aspect, the present invention provides a multiple room air conditioner comprising: an outdoor unit having a compressor, a four-way valve, an outdoor heat exchanger, and an outdoor expansion valve; a plurality of indoor units, each having an indoor expansion valve and an indoor heat exchanger; and a cooling/heating operation mode switching unit to change refrigerant flow to the indoor units, the outdoor unit being connected to the cooling/heating operation mode switching unit via a high-pressure gas pipe, a low-pressure gas pipe and a liquid pipe, and the cooling/heating operation mode switching unit being connected to the respective indoor units via the gas pipes and the liquid pipe, thereby accomplishing a cooling cycle performing simultaneous cooling and heating operation, wherein, when the four-way valve is set to form a heating circuit, and the multiple room air conditioner is operated in the simultaneous cooling and heating operation mode, some of the high-pressure refrigerant discharged from the compressor through the high-pressure gas pipe is bypassed to the liquid pipe at the outdoor heat exchanger side, among the liquid pipe diverging from the indoor units performing heating operation to the outdoor heat exchanger and the indoor units performing cooling operation through a branch part.

When the four-way valve is set to form the heating circuit, and the multiple room air conditioner according to the present invention is operated in the simultaneous cooling and heating operation mode, some of the refrigerant discharged from the compressor through the high-pressure gas pipe is bypassed to the liquid pipe at the outdoor heat exchanger side, among the liquid pipe diverging from the indoor units performing the heating operation to the outdoor heat exchanger and the indoor units performing the cooling operation through the branch part. Consequently, the pressure in the liquid pipe at the outdoor heat exchanger side, into which the high-pressure gas flows, is increased, and the flow rate of the liquid refrigerant flowing into the liquid pipe at the outdoor heat exchanger side is decreased. As a result, the flow rate of the liquid refrigerant flowing from the indoor units performing the heating operation to the indoor units performing the cooling operation is increased, and therefore, the required amount of liquid refrigerant flowing to the indoor units performing the cooling operation is obtained without using the pressure sensor to detect the pressure in the refrigerant pipe, which is necessary in the conventional art as described above.

Preferably, when the four-way valve is set to form the heating circuit, and the multiple room air conditioner is operated in the simultaneous cooling and heating operation mode, some of the high-pressure gas discharged from the compressor through the high-pressure gas pipe is bypassed to the liquid pipe between the branch part of the liquid pipe and a receiver tank disposed more adjacent to the outdoor heat exchanger side than the branch part.

When the liquid refrigerant flows from the indoor units performing the heating operation to the outdoor heat exchanger side, the high-pressure gas flows upstream of the receiver tank. As a result, the liquid refrigerant flowing to the outdoor heat exchanger side comes into contact with the high-pressure gas immediately before flowing to the receiver tank, and therefore, some of the liquid refrigerant is guided to the indoor units performing the cooling operation by the high-pressure gas before being introduced into the receiver tank. Consequently, accumulation of the liquid refrigerant in the receiver tank is prevented, and therefore, shortage of the refrigerant circulating in the system is prevented.

Preferably, when the four-way valve is set to form the heating circuit, and the multiple room air conditioner is operated in the simultaneous cooling and heating operation mode, some of the high-pressure gas discharged from the compressor through the high-pressure gas pipe is bypassed to the liquid pipe at the outdoor heat exchanger side in the direction opposite to the flow of the refrigerant flowing through the liquid pipe.

As a result, the liquid refrigerant flowing from the indoor units performing the heating operation to the outdoor heat exchanger side is guided in the opposite direction, i.e., toward the indoor units performing the cooling operation by the flow of the high-pressure gas. Consequently, the amount of the liquid refrigerant flowing from the indoor units performing the heating operation to the indoor units performing the cooling operation is sufficiently obtained even when the bypass amount of the high-pressure gas flowing through the bypass pipe 60 is small.

Preferably, when the four-way valve is set to form the heating circuit, and the multiple room air conditioner is operated in the simultaneous cooling and heating operation mode, some of the high-pressure gas discharged from the compressor through the high-pressure gas pipe is bypassed to the liquid pipe at the outdoor heat exchanger side through a bypass pipe, on which a flow rate controlling member is mounted.

Consequently, the flow rate of the high-pressure gas flowing though the bypass pipe is properly controlled by the flow rate controlling member. Furthermore, the flow rate of the liquid refrigerant flowing from the indoor units performing the heating operation to the indoor units performing the cooling operation is properly controlled by the flow rate controlling member, and therefore, the multiple room air conditioner is efficiently operated.

Preferably, the flow rate controlling member is a variable flow rate controlling member that varies the flow rate of high-pressure gas flowing through the bypass pipe.

Consequently, the flow rate of the high-pressure gas flowing through the bypass pipe is varied by the flow rate controlling member based on the operational condition of the multiple room air conditioner, and therefore, the multiple room air conditioner is more efficiently operated.

Preferably, when the four-way valve is set to form the heating circuit, and the multiple room air conditioner is operated in the simultaneous cooling and heating operation mode, some of the high-pressure gas discharged from the compressor through the high-pressure gas pipe is bypassed to the liquid pipe at the outdoor heat exchanger side through the bypass pipe, the flow rate of the high-pressure gas flowing through the bypass pipe being controlled by the variable flow rate controlling member according to the cooling/heating operation ratio of the indoor units.

Consequently, the flow rate of the high-pressure gas flowing through the bypass pipe is controlled by the variable flow rate controlling member according to the cooling/heating operation ratio of the indoor units. Furthermore, the bypass amount of the high-pressure gas is controlled according to the cooling/heating operation ratio of the indoor units, and therefore, more pleasant air conditioning is accomplished, and the multiple room air conditioner is more efficiently operated.

Additional aspects and/or advantages of the invention will be set forth in part in the description which follows and, in part, will be obvious from the description, or may be learned by practice of the invention.

The present invention also provides a method of controlling an air conditioner comprising an outdoor unit, a plurality of indoor units and an operation mode switching unit for controlling the direction of flow of refrigerant through each indoor unit to enable simultaneous heating and cooling by selected indoor units, wherein high pressure refrigerant flows via a high pressure flow path from the outdoor unit to those indoor units selected to perform a heating operation and subsequently via a liquid flow path back into the outdoor unit, a portion of the refrigerant that has passed through said indoor units to perform a heating operation being diverted from the liquid flow path to those indoor units that have been selected to perform a cooling operation before flowing back into the outdoor unit via a low-pressure flow path, wherein the method is characterised by the step of passing high pressure refrigerant through a bypass flow path between the high pressure flow path and the liquid flow path to increase the pressure of refrigerant flowing back into the outdoor unit via the liquid flow path that has not been diverted to the indoor units that have been selected to perform a cooling operation, thereby increasing the flow rate of refrigerant diverted from the liquid flow path to the indoor units that have been selected to perform a cooling operation.

Embodiments of the invention will now be described, by way of example only, with reference to the accompanying Figures 1 to 9, in which:
Figure 1 is a view schematically showing the structure of a multiple room air conditioner according to a first embodiment of the present invention;
Figure 2 is a view showing refrigerant flow when the multiple room air conditioner according to the first embodiment of the present invention is operated in simultaneous cooling and heating operation mode and main heating operation mode;
Figure 3 is a view showing the operation of the multiple room air conditioner according to the first embodiment of the present invention;
Figure 4 is a partially enlarged view showing a modification of the multiple room air conditioner according to the first embodiment of the present invention;
Figure 5 is a view schematically showing the structure of a multiple room air conditioner according to a second embodiment of the present invention;
Figure 6 is a view schematically showing the structure of a multiple room air conditioner according to a third embodiment of the present invention;
Figure 7 is a view schematically showing the structure of a multiple room air conditioner according to a fourth embodiment of the present invention;
Figure 8 is a view schematically showing the structure of a multiple room air conditioner according to a fifth embodiment of the present invention;
Figure 9 is a view schematically showing the structure ot a multiple room air conditioner according to a sixth embodiment of the present invention; and
Figure 10 is a view showing a conventional air conditioner.

Reference will now be made in detail to the embodiment of the present invention, examples of which are illustrated in the accompanying drawings, wherein like reference numerals refer to like elements throughout. The embodiment is described below to explain the present invention by referring to the figures.

### First embodiment

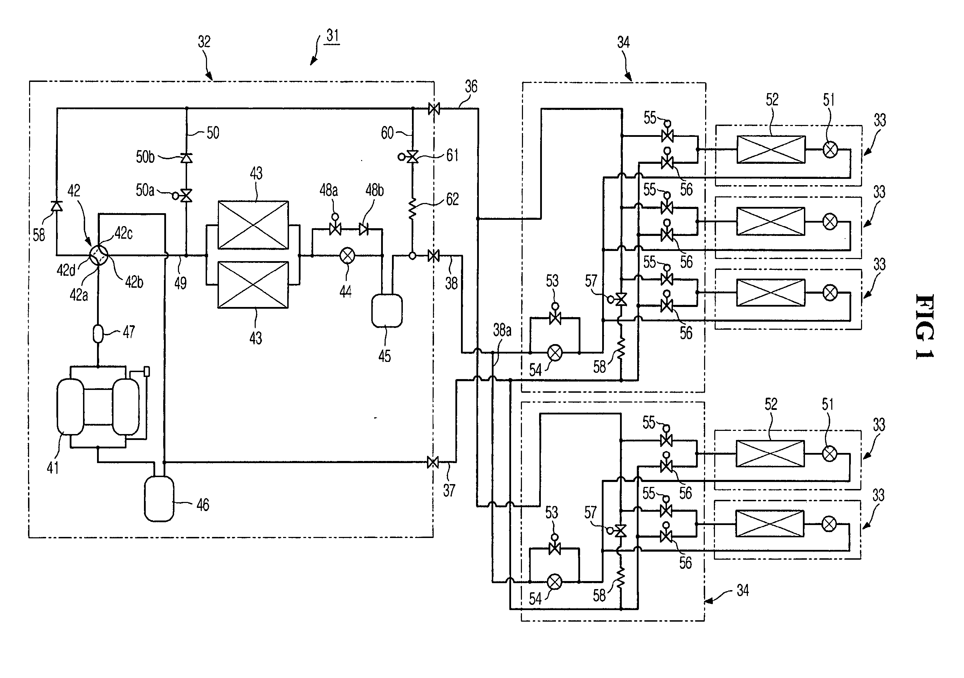

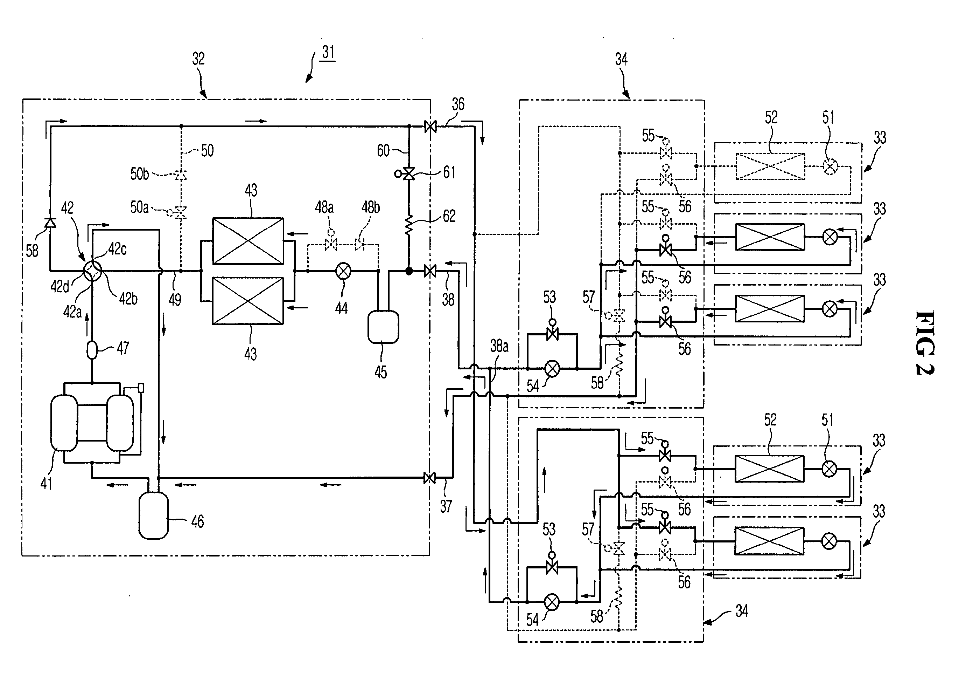

Figures 1 to 4 show a multiple room air conditioner 31 according to a first embodiment of the present invention.

Figure 1 is a circuit diagram showing the structure of the multiple room air conditioner 31 according to the first embodiment of the present invention.

As shown in Figure 1, the multiple room air conditioner 31 comprises: an outdoor unit 32; a plurality (five in the drawings) of indoor units 33; and a plurality (two in the drawings) of cooling/heating operation mode switching units 34 to change refrigerant flow to the indoor units 33. The outdoor unit 32 is connected to the respective cooling/heating operation mode switching units 34 via three pipes, i.e., a first pipe 36, a second pipe 37 and a third pipe 38. The respective cooling/heating operation mode switching units 34 are connected to the respective indoor units 33 via confluent or branch pipes of the first and second pipes 36 and 37, and the third pipe 38.

The first pipe 36, the second pipe 37 and the third pipe 38 serve as a high-pressure gas pipe, a low-pressure gas pipe and a middle-pressure liquid pipe, respectively, when the multiple room air conditioner 31 is operated in simultaneous cooling and heating operation mode and an outdoor four-way valve 42 is set to form a heating circuit. Hereinafter, the pipes 36, 37 and 39 will be referred to as the high-pressure gas pipe, the low-pressure gas pipe and the liquid pipe, respectively.

The outdoor unit 32 comprises a compressor 41, a four-way valve 42, an outdoor heat exchanger 43, an outdoor expansion valve 44, a receiver tank 45, and an accumulator 46. The four-way valve 42 has four ports 42a, 42b, 42c and 42d. The first port 42a is connected to the outlet of the compressor 41 via an oil separator 47; the second port 42b is connected to the liquid pipe 38 via the outdoor heat exchanger 43, the outdoor expansion valve 44 and the receiver tank 45; the third port 42c is connected to the low-pressure gas pipe 37, which is connected to the inlet of the compressor 41; the forth port 42d is connected to the high-pressure gas pipe 36 via a non-return valve 58.

In this embodiment, the outdoor heat exchanger 43 comprises a plurality (two in the drawings) of heat exchangers, which are connected in parallel to each other. Alternatively, the outdoor heat exchanger 43 may comprise a single heat exchanger. The outdoor expansion valve 44 of the outdoor unit 32 is a valve whose opening level is controllable, such as an electronic expansion valve. Between the outdoor heat exchanger 43 and the receiver tank 45 are disposed an opening/closing valve 48a and a non-return valve 48b, which are electronic valves, and the outdoor expansion valve 44 while the opening/closing valve 48a and the non-return valve 48b are connected in series to each other and the outdoor expansion valve 44 is connected in parallel to the opening/closing valve 48a and the non-return valve 48b. When the outdoor unit 32 forms a cooling circuit, liquid refrigerant from the outdoor heat exchanger 43 passes through the opening/closing valve 48a and the non-return valve 48b, and then bypasses the outdoor expansion valve 44. When the air conditioner is operated in heating operation mode or simultaneous cooling and heating operation mode and main cooling operation mode, on the other hand, the liquid refrigerant passes through the outdoor expansion valve 44. On the pipe connecting the four-way valve 42 and the outdoor heat exchanger 43 is provided a branch part 49, from which a bypass pipe 50 extends such that the bypass pipe 50 is connected to the high-pressure pipe 36. On the bypass pipe 50 are mounted an opening/closing valve 50a and the non-return valve 50b.

Each indoor unit 33 comprises an indoor expansion valve 51 and an indoor heat exchanger 52.

The high-pressure gas pipe 36, the low-pressure gas pipe 37 and the liquid pipe 38 diverge before connection to each cooling/heating operation mode switching units 34. The branch pipe of the liquid pipe 38 further diverges through an opening/closing valve 53 and an expansion valve 54, which are connected in parallel to each other, and is connected to the indoor expansion valve 51 of each indoor unit 33. The high-pressure gas pipe 36 and the low-pressure gas pipe 37 diverge corresponding to the respective indoor units 33. The branch pipes of the high-pressure gas pipe 36 and the low-pressure gas pipe 37 extend through opening/closing valves 55 and 56, which are switching valves of each cooling/heating operation mode switching unit 34, are confluent such that the confluent pipe of the high-pressure gas pipe 36 and the low-pressure gas pipe 37 is connected to the indoor heat exchanger 52 of each indoor unit 33. Also, the branch pipes of the high-pressure gas pipe 36 and the low-pressure gas pipe 37 are connected to each other via an opening/closing valve 57 and a capillary tube 58, which are positioned more adjacent to the outdoor unit 32 than the opening/closing valves 55 and 56 in each cooling/heating operation mode switching unit 34. The opening/closing valves 53 and 57 may be reducing valves that can be fully closed, such as electronic expansion valves.

Between the liquid pipe 38 and the high-pressure gas pipe 36, which are positioned more adjacent to the outdoor unit 32 than a branch part 38a of the liquid pipe 38, is disposed a bypass pipe 60, on which an opening/closing valve 61 and a flow rate controlling member 62 are mounted in series.

The flow rate controlling member 62 is a member that applies flow resistance to the pipe. For example, the flow rate controlling member 62 may be a capillary tube or a variable valve that varies the flow rate of high-pressure gas flowing through the bypass pipe 60 instead of the flow resistance, such as an electronic expansion valve.

The operation of the multiple room air conditioner with the above-stated construction will now be described.

When the multiple room air conditioner 31 is operated in simultaneous cooling and heating operation mode, and also, in main heating operation mode in which two of the indoor units 33 perform cooling operation and two of the indoor unit 33 perform heating operation, and heating load is greater than cooling load, as shown in Figure 1, the first port 42a of the four-way valve 42 is connected to the fourth port 42d of the four-way valve 42, and at the same time, the second port 42b of the four-way valve 42 is connected to the third port 42c of the four-way valve 42. In the main heating operation mode, the opening/closing valve 50a on the bypass pipe 50 is closed. In the cooling/heating operation mode switching units 34, the opening/closing valves 55 on the high-pressure pipe 36 are opened, and at the same time, the opening/closing valves 56 on the low-pressure pipe 38 are closed for the indoor units 33 performing the heating operation. On the other hand, the opening/closing valves 55 on the high-pressure pipe 36 are closed, and at the same time, the opening/closing valves 56 on the low-pressure pipe 38 are opened for the indoor units 33 performing the heating operation.

In the main heating operation mode, refrigerant discharged from the compressor 41 is supplied into the high-pressure pipe 36 through the first and fourth port 42a and 42d of the four-way valve 42 and the non-return valve 58, and is then supplied into the indoor heat exchangers 52 of the indoor units 33 performing the heating operation through the opening/closing valves 55 of the coohng/heating operation mode switching units 34 such that the refrigerant is condensed by the indoor heat exchangers 52 to heat the interiors of rooms. Thereafter, the refrigerant is forwarded to the liquid pipe 38 through the expansion valves 54. Some of the refrigerant forwarded to the liquid pipe 38 is supplied into the indoor units 33 performing the cooling operation through the branch part 38a, passes through the indoor expansion valves 51, and is then evaporated by the indoor heat exchangers 52 to cool the interiors of rooms. Subsequently, the evaporated refrigerant is forwarded to the inlet of the compressor 42 through the low-pressure gas pipe 37 connected to the indoor heat exchangers 52 and the accumulator 46 of the outdoor unit 32. The remainder of the refrigerant forwarded to the liquid pipe 38 and then flowing through the branch part 38a is returned to the outdoor unit 32. Specifically, the refrigerant is supplied into the outdoor heat exchanger 43 through the receiver tank 45 and the outdoor expansion valve 44 such that the refrigerant is evaporated by the outdoor heat exchanger 43. The evaporated refrigerant is forwarded to the compressor 41 through the second and third ports 42b and 42c of the four-way valve 42, the low-pressure gas pipe 37 and the accumulator.

When the multiple room air conditioner 31 is operated in the simultaneous cooling and heating operation mode, and also, in main cooling operation mode in which cooling load is greater than heating load, the first port 42a of the four-way valve 42 is connected to the second port 42b of the four-way valve 42, and the third port 42c of the four-way valve 42 is connected to the fourth port 42d of the four-way valve 42 in the outdoor unit 32. At the same time, the opening/closing valve 50a on the bypass pipe 50 is opened. In the cooling/heating operation mode switching units 34, the opening/closing valves 55 on the high-pressure pipe 36 are closed, and at the same time, the opening/closing valves 56 on the low-pressure pipe 38 are opened for the indoor units 33 performing the cooling operation. On the other hand, the opening/closing valves 55 on the high-pressure pipe 36 are opened, and at the same time, the opening/closing valves 56 on the low-pressure pipe 38 are closed for the indoor units 33 performing the heating operation.

As a result, refrigerant discharged from the compressor 41 is supplied into the outdoor heat exchanger 43 through the first and second ports 42a and 42b of the four-way valve 42 such that the refrigerant is evaporated by the outdoor heat exchanger 43. The evaporated refrigerant is supplied into the indoor units 33 performing the cooling operation from the liquid pipe 38 through the expansion valve 44 and the receiver tank 45. The refrigerant is decompressed by the indoor expansion valves 51, and is then evaporated by the indoor heat exchangers 52 to cool the interiors of rooms. Subsequently, the low-pressure refrigerant is forward to the inlet of the compressor 41 through the opening/closing valves 56 of the cooling/heating operation mode switching units 34, the low-pressure gas pipe 37 and the accumulator 46. Also, some of the refrigerant discharged from the compressor 41 and then passing through the four-way valve 42 flows through the bypass pipe 50, on which the opening/closing valve 50a is opened, and is then supplied into the indoor units 33 performing the heating operation from the high-pressure gas pipe 36 through the opening/closing valves 55 of the cooling/heating operation mode switching units 34 such that the refrigerant is condensed by the indoor heat exchangers 52 to heat the interiors of rooms. Thereafter, the condensed refrigerant is forwarded to the liquid pipe 38 through the expansion valves 54 such that the condensed refrigerant joins the liquid refrigerant flowing into the liquid pipe 38 through outdoor heat exchanger 43. The confluent refrigerant is supplied into the indoor units 33 performing the cooling operation and is then forwarded to the compressor 41 through the low-pressure gas pipe 37.

When the air conditioner is operated on the basis of balanced cooling and heating load, i.e., the indoor units 33 performs cooling and heating operation while the cooling operation capacity is equal to the heating operation capacity, for example, the outdoor temperature is low, the connection of the first to fourth ports 42a to 42d of the four-way valve 42 is the same as the main heating operation mode for the outdoor unit 32. Specifically, the opening/closing valve 50a of the bypass pipe 50 is closed. For the indoor units 33, the opening/closing valves 55 and 56 are opened and closed in the same manner as the main cooling and heating operation modes, respectively. In this case, the refrigerant discharged from the compressor 41 is supplied into the indoor units 33 performing the heating operation through the first and fourth ports 42a and 42d of the four-way valve 42, the high-pressure gas pipe 36 and the cooling/heating operation mode switching units 34 such that the refrigerant is condensed to heat the interiors of rooms. Subsequently, the refrigerant is supplied into the indoor units 33 performing the cooling operation from the cooling/heating operation mode switching units 34 through the liquid pipe 38 such that the refrigerant is evaporated to cool the interiors of rooms, and is then forwarded to the inlet of the compressor 41 through the low-pressure gas pipe 37 and the accumulator 46. Consequently, the refrigerant does not flow in the liquid pipe 38 from the second port 42b of the four-way valve 42 to the cooling/heating operation mode switching units 34 through the bypass pipe 50, the outdoor heat exchanger 43, the outdoor expansion valve 44 and the receiver tank 45 and between the third port 42c of the four-way valve 42 and the low-pressure gas pipe 37. When the outdoor temperature is high, on the other hand, balanced operation is also performed through the same connection as the main cooling operation mode.
When the same connection as the main cooling or heating operation mode is set according to the outdoor temperature in this way, the air conditioner can be rapidly operated in the main cooling operation mode or the main heating operation mode without switching the four-way valve 42, although the outdoor temperature is high, and therefore, the cooling load is increased, or the outdoor temperature is low, and therefore, the heating load is increased.

When the indoor units 33 only perform the heating operation, the four-way valve 42 is set in the same manner as the main heating operation mode, the opening/closing valve 50a of the bypass pipe 50 is closed, the opening/closing valves 55 of the cooling/heating operation mode switching units 34 are opened, and the opening/closing valves 56 of the cooling/heating operation mode switching units 34 are closed. When the indoor units 33 only perform the cooling operation, on the other hand, the four-way valve 42 is set in the same manner as the main cooling operation mode, the opening/closing valve 50a of the bypass pipe 50 is closed, and the opening/closing valve 48a is opened. For the indoor units 33, the opening/closing valves 55 of the cooling/heating operation mode switching units 34 are closed, and the opening/closing valves 56 of the cooling/heating operation mode switching units 34 are opened.

When the four-way valve 42 is set to form the heating circuit, and the multiple room air conditioner is operated in the simultaneous cooling and heating operation mode as described above, some of the refrigerant discharged from the compressor 41 through the high-pressure gas pipe 36 is bypassed to the liquid pipe 38 at the outdoor heat exchanger side, among the liquid pipe 38 diverging from the indoor units 33 performing the heating operation to the outdoor heat exchanger 43 and the indoor units 33 performing the cooling operation through the branch part 38a. Consequently, the pressure in the liquid pipe 38 at the outdoor heat exchanger side, into which the high-pressure gas flows, is increased, and the flow rate of the liquid refrigerant flowing into the liquid pipe 38 at the outdoor heat exchanger side is decreased. As a result, the flow rate of the liquid refrigerant flowing from the indoor units 33 performing the heating operation to the indoor units 33 performing the cooling operation through the branch part 38a is increased, and therefore, the required amount of liquid refrigerant flowing to the indoor units 33 performing the cooling operation is obtained without using the pressure sensor to detect the pressure in the refrigerant pipe, which is necessary in the conventional art as described above.

When the four-way valve 42 is set to form the heating circuit, and the multiple room air conditioner is operated in the simultaneous cooling and heating operation mode, i.e., when the multiple room air conditioner is operated in the simultaneous cooling and heating operation mode and the main heating operation mode, the heating capacity is greater than the rated capacity as compared to the cooling capacity. Consequently, the indoor units may intermittently perform the heating operation, i.e., the indoor units performing the heating operation may be repetitively turned on and off, and therefore, the performance loss of the compressor may be increased and pleasantness may be decreased. According to the multiple room air conditioner with the above-mentioned construction, however, some of the high-pressure gas discharged from the compressor 44 through the high-pressure gas pipe 36 is bypassed to the liquid pipe 38 at the outdoor heat exchanger side. As a result, some of the high-pressure gas is used to control the flow rate of the liquid refrigerant while some of the heating capacity is reduced. Consequently, the compressor is more efficiently operated with the balanced heating and cooling capacities. At the same time, the on and off repetition of the indoor units 33 performing the heating operation due to the temperature control when performing the heating operation is reduced, and therefore, pleasantness is improved.

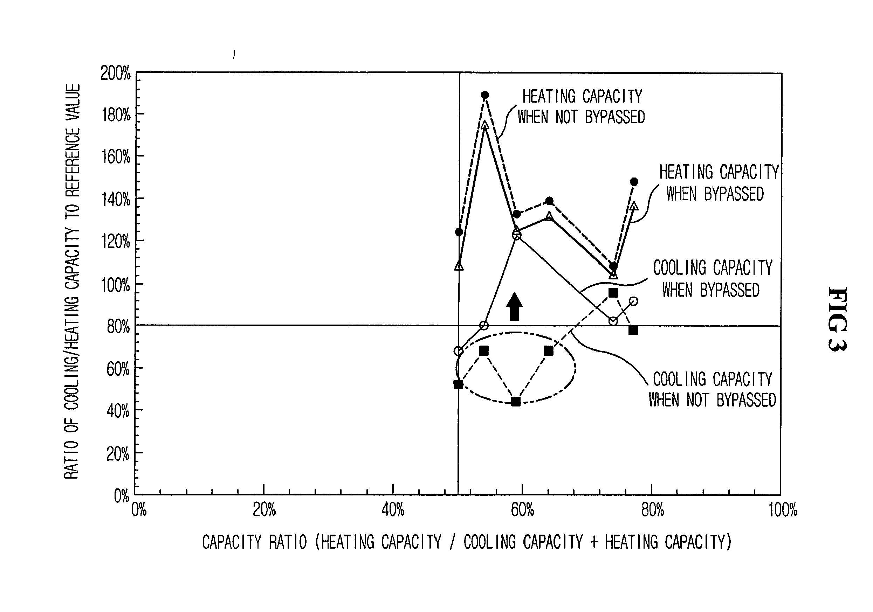

The above-mentioned operation will be further described with reference to Figure 3, which shows cooling and heating capacities of the indoor units 33 when some of the high-pressure gas is bypassed to the liquid pipe 38 at the outdoor heat exchanger side through the bypass pipe 60 and when some of the high-pressure gas is not bypassed to the liquid pipe 38 at the outdoor heat exchanger side, in the case that the multiple room air conditioner is operated in the simultaneous cooling and heating operation mode and the main heating operation mode. The vertical axis indicates cooling/heating capacity ratio, and the horizontal axis indicates ratio of heating capacity of indoor units performing heating operation to total cooling and heating capacity of indoor units performing cooling and heating operation. As apparent from Figure 3, the heating capacity is slightly decreased but the cooling capacity is considerably increased when some of the high-pressure gas is bypassed as compared to when some of the high-pressure gas is not bypassed. That is, the compressor 44 is more efficiently operated.

When being bypassed to the liquid pipe 38 at the outdoor heat exchanger side, some of the high-pressure gas is bypassed to the middle-pressure liquid pipe between the branch part 38a of the liquid pipe 38 and the receiver tank 45 disposed more adjacent to the outdoor heat exchanger side than the branch part 38a.
Consequently, the liquid refrigerant flows from the indoor units 33 performing the heating operation to the outdoor heat exchanger side through the branch part 38a, high-pressure gas flows upstream of the receiver tank 45. As a result, the liquid refrigerant flowing to the outdoor heat exchanger side comes into contact with the high-pressure gas immediately before flowing to the receiver tank 45, and therefore, the liquid refrigerant is guided to the branch part 38a. Consequently, accumulation of the liquid refrigerant in the receiver tank 45 is prevented, and therefore, shortage of the refrigerant circulating in the system is prevented.

When being bypassed to the liquid pipe 38 at the outdoor heat exchanger side, some of the high-pressure gas is bypassed through the bypass pipe 60 on which the flow rate controlling member 62 is mounted. Consequently, the flow rate of the high-pressure gas flowing though the bypass pipe 60 is properly controlled by the flow rate controlling member 62. That is, the flow rate of the liquid refrigerant flowing from the indoor units 33 performing the heating operation to the indoor units 33 performing the cooling operation is properly controlled by the flow rate controlling member 62.

If the flow rate controlling member 62 is a variable flow rate controlling member that varies the flow rate of the high-pressure gas flowing through the bypass pipe 60, the flow rate of the high-pressure gas flowing through the bypass pipe 60 is varied by the flow rate controlling member 62, and the flow rate of the liquid refrigerant flowing from the indoor units 33 performing the heating operation to the indoor units 33 performing the cooling operation is properly controlled by the flow rate controlling member 62, based on the operating state of the multiple room air conditioner.

When the flow rate of the high-pressure gas is varied by the variable flow rate controlling member according to the cooling/heating operation ratio of the indoor units, the bypass amount of the high-pressure gas required according to the cooling/heating operation ratio of the indoor units is controlled, and therefore, more pleasant air conditioning is accomplished.

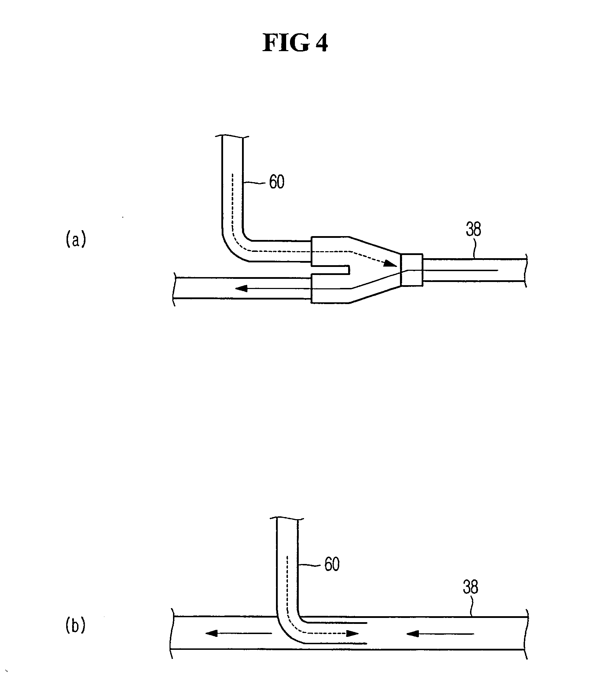

When some of the high-pressure gas is bypassed to the liquid pipe 38 at the outdoor heat exchanger side, for example, the connection end of the bypass pipe 60 to the liquid pipe 38 may be bent toward the liquid pipe 38 such that the confluent part is formed in the shape of a "Y" as shown in Figure 4a, i.e., the gas is bypassed in the direction opposite to the flow of the refrigerant flowing through the liquid pipe. In this case, the liquid refrigerant flowing through the liquid pipe 38 is guided in the opposite direction, i.e., toward the indoor units 33 performing the cooling operation by the flow of the high-pressure gas. Also, the front end of the bypass pipe 60 may extend into the liquid pipe 38, and at the same time, the front end of the bypass pipe 60 may be bent such that the gas is bypassed in the direction opposite to the flow of the refrigerant flowing through the liquid pipe as shown in Figure 4b. This case provides the same effect as the above-mentioned first case. Consequently, the amount of the liquid refrigerant flowing from the indoor units 33 performing the heating operation to the indoor units 33 performing the cooling operation is sufficiently obtained even when the bypass amount of the high-pressure gas flowing through the bypass pipe 60 is small.

### Second embodiment

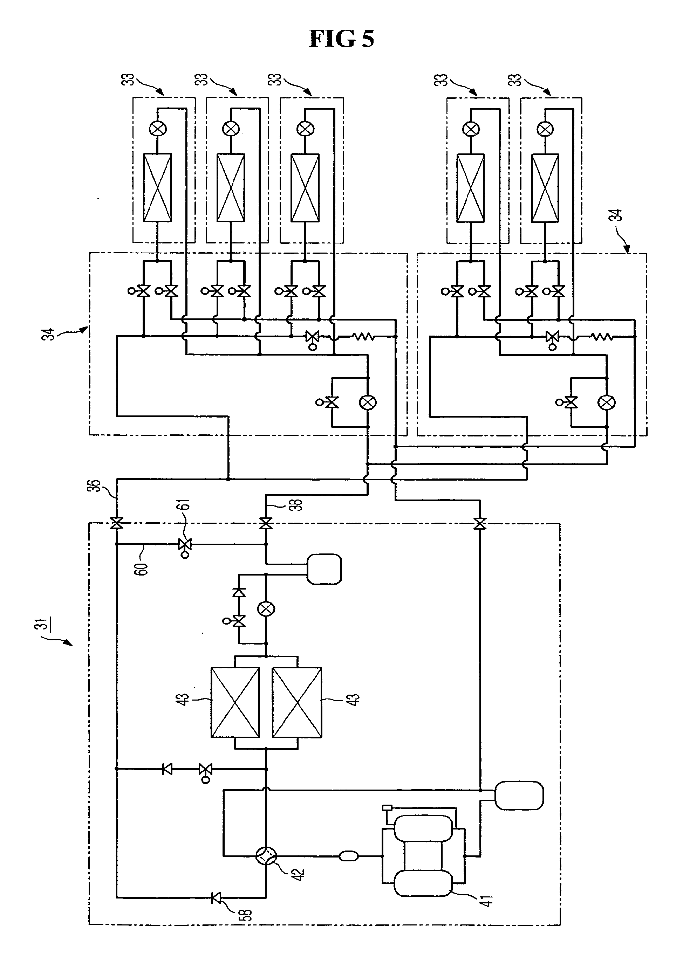

Figure 5 is a view schematically showing the structure of a multiple room air conditioner according to a second embodiment of the present invention.

The multiple room air conditioner according to the second embodiment of the present invention is identical to the multiple room air conditioner according to the first embodiment of the present invention except that only the opening/closing valve 61 is mounted on the bypass pipe 60 disposed between the liquid pipe 38 and the high-pressure gas pipe 36, and the flow rate controlling member, such as the capillary tube, is not mounted on the bypass pipe 60.

Although the flow rate controlling member is not mounted on the bypass pipe 60, the opening/closing valve 61 mounted on the bypass pipe 60 has flow resistance. Consequently, the flow rate of the high-pressure gas flowing through the bypass pipe 60 is properly controlled by means of the flow resistance of the opening/closing valve 61. When the multiple room air conditioner is in the simultaneous cooling and heating operation mode and the main heating operation mode, the flow rate of the liquid refrigerant flowing from the indoor units performing the heating operation to the outdoor heat exchanger 43 is properly controlled, and therefore, the flow rate of the liquid refrigerant flowing from the indoor units 33 performing the heating operation to the indoor units 33 performing the cooling operation through the liquid pipe 38 is properly controlled.

The flow rate controlling member is not necessary, and therefore, the cost reduction is accomplished.

### Third embodiment

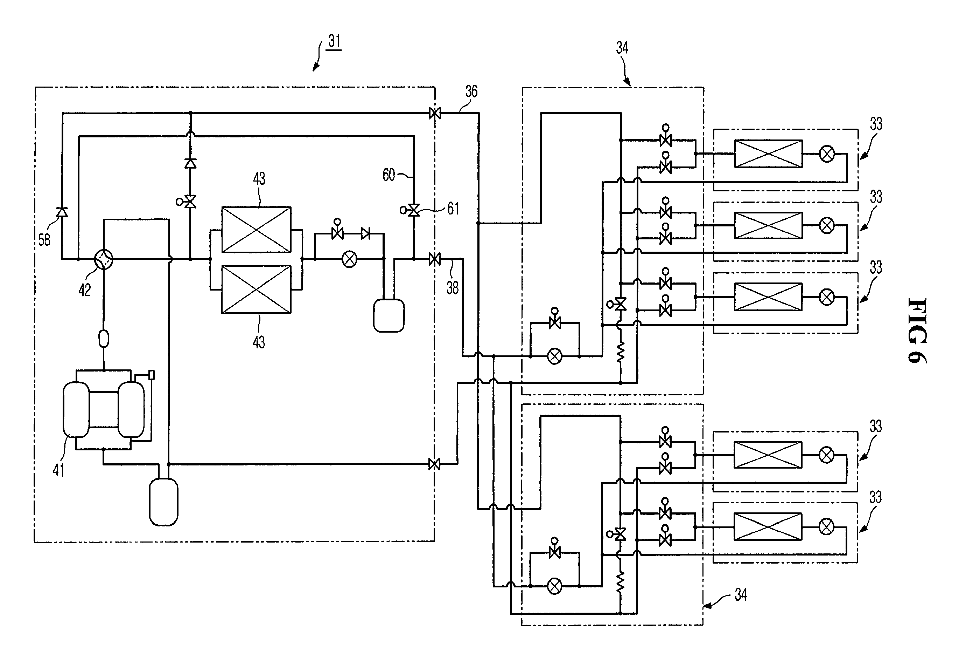

Figure 6 is a view schematically showing the structure of a multiple room air conditioner according to a third embodiment of the present invention.

The multiple room air conditioner according to the third embodiment of the present invention is characterized, as compared to the multiple room air conditioner according to the second embodiment of the present invention, in that the connection end of the bypass pipe 60 to the high-pressure gas pipe 36 is disposed between the four-way valve 42 and the non-return valve 58 provided at the opposite side of the compressor 41 from the four-way valve 42. The connection end of the bypass line 60 to the liquid pipe 38 is disposed between the receiver tank 45 and the branch part 38 in the same manner as the first and second embodiments.

When the multiple room air conditioner is operated in the simultaneous cooling and heating operation mode and the main heating operation mode, the flow rate of the liquid refrigerant flowing from the indoor units 33 performing the heating operation to the indoor units 33 performing the cooling operation is properly controlled. When the multiple room air conditioner is operated in the cooling operation mode, the bypass pipe 60 is used to bypass the liquid refrigerant. That is, the liquefied refrigerant, i.e., the refrigerant which has been liquefied after passing through the condenser (the outdoor heat exchanger 43 in the cooling operation), is bypassed to the inlet of the compressor 41 to prevent the refrigerant discharge temperature of the compressor 41 from exceeding a predetermined level in the cooling operation. In the third embodiment, the opening/closing valve 61 is opened in the cooling operation. As a result, the refrigerant, which has been compressed by the compressor 41 and liquefied by passing through the outdoor heat exchanger 43, is introduced into the bypass pipe 60 through the opening/closing valve 61, and is then forwarded to the inlet of the compressor 41 through the four-way valve 42 and the accumulator 46. Consequently, the refrigerant discharge temperature of the compressor 41 is properly decreased.

### Fourth embodiment

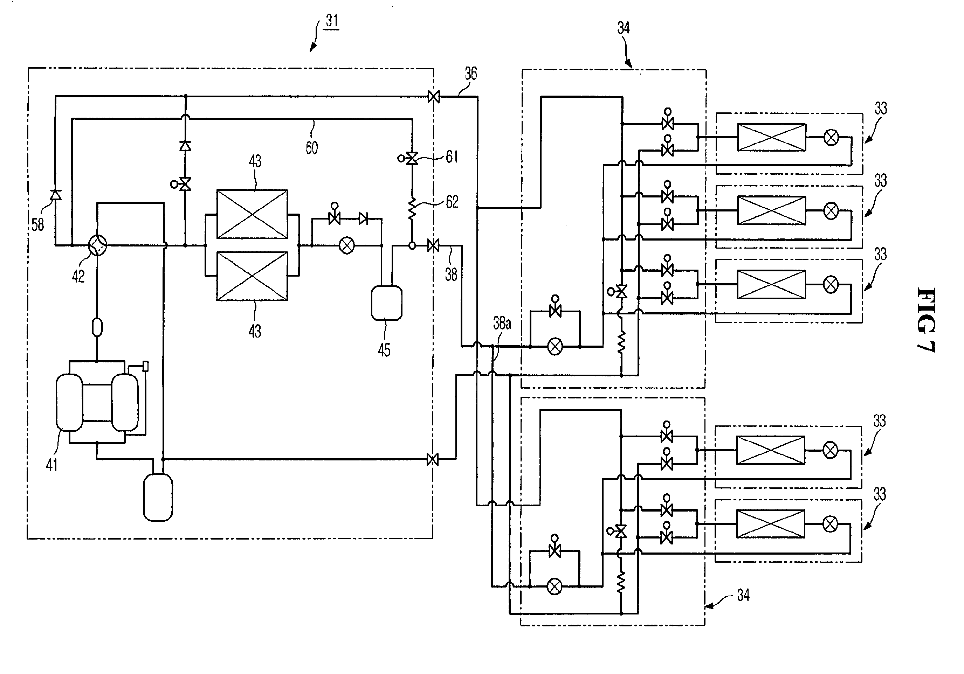

Figure 7 is a view schematically showing the structure of a multiple room air conditioner according to a fourth embodiment of the present invention.

The multiple room air conditioner according to the fourth embodiment of the present invention is identical to the multiple room air conditioner according to the third embodiment of the present invention except that the flow rate controlling member 62, such as the capillary tube, as well as the opening/closing valve 61 are mounted on the bypass pipe 60.

Since the flow rate controlling member 62 is mounted on the bypass pipe 60, the pressure of the liquid refrigerant introduced into the bypass pipe 60 is reduced by the flow rate controlling member 62. In this way, the temperature of the refrigerant can be preliminarily reduced, and therefore, the refrigerant discharge temperature of the compressor 41 can be decreased more effectively in the cooling operation.

### Fifth embodiment

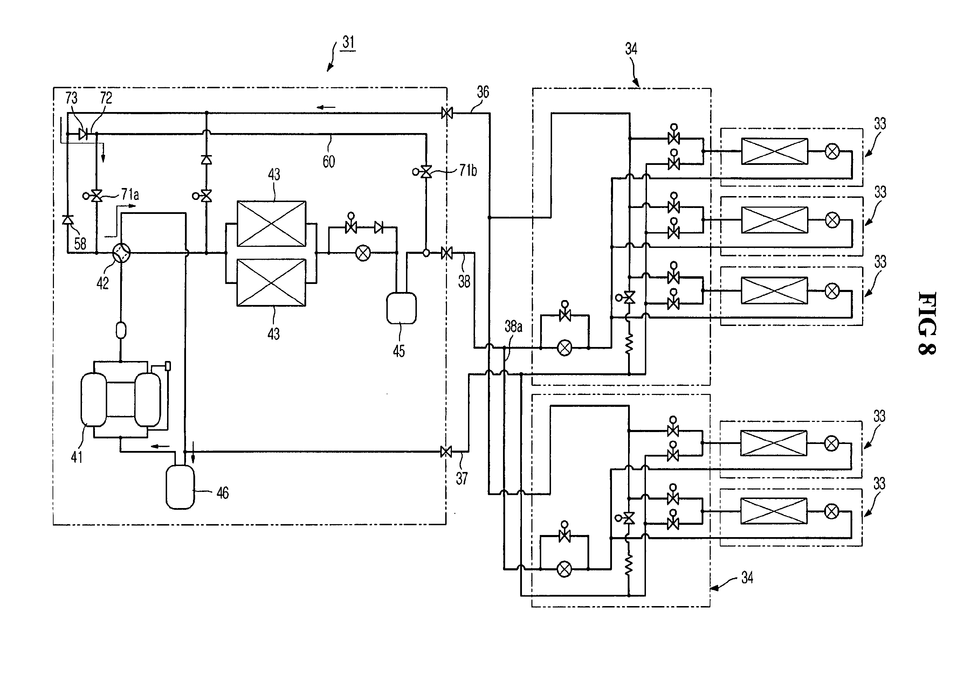

Figure 8 is a view schematically showing the structure of a multiple room air conditioner according to a fifth embodiment of the present invention.

The multiple room air conditioner according to the fifth embodiment of the present invention is identical to the multiple room air conditioner according to the third embodiment of the present invention except that opening/closing valves 71a and 71b, which are electronic valves, are mounted on both ends of the bypass pipe 60, the middle part of the bypass pipe 60 disposed between the opening/closing valves 71a and 71b is connected to the non-return valve 58 of the high-pressure pipe 36 through a connection pipe 72, and a non-return valve 73 to allow fluid to flow from the high-pressure pipe 36 to the bypass pipe 60 and prevent back-flow of the fluid is mounted on the connection pipe 72.

One end of the bypass pipe 60 is connected between the receiver tank 45 of the liquid pipe 38 and the branch part 38a, and the other end of the bypass pipe 60 is connected between the four-way valve 42 of the high-pressure gas pipe 36 and the non-return valve 58 in the same manner as the third embodiment.

In the fifth embodiment, the opening/closing valves 71a and 71b are opened in the cooling operation. As a result, the refrigerant, which has been compressed by the compressor 41 and liquefied by passing through the outdoor heat exchanger 43, is introduced into the bypass pipe 60, and is then forwarded to the inlet of the compressor 41 through the four-way valve 42 and the accumulator 46.
Consequently, the refrigerant discharge temperature of the compressor 41 is properly decreased.

When the operation mode of the air conditioner is switched to the cooling operation mode, or when gas leaks out of the opening/closing valve connected to the high-pressure pipe 36, gaseous refrigerant is left in the high-pressure line 36, which is not used in the cooling operation. The left refrigerant is liquefied by heat exchange with surrounding air through the pipe wall of the high-pressure pipe 36, and the liquefied refrigerant is accumulated in the high-pressure pipe 36. In this case, the refrigerant is unnecessarily accumulated in the unused line, and therefore, the amount of the refrigerant to be circulated is decreased.

According to the fifth embodiment, the opening/closing valve 71b on one end of the bypass pipe 60 (which is connected to the liquid pipe 38) is closed, and the opening/closing valve 71a on the other end of the bypass pipe 60 (which is connected to the high-pressure gas pipe 36) is opened. As a result, the liquid refrigerant in the high-pressure pipe 36 passes through part of the bypass pipe 60 on which the connection pipe 72 and the opening/closing valve 71a are mounted, and is then forwarded to the inlet of the compressor 41 through the four-way valve 42 and the accumulator 46, as shown in FIGURE 8. In this way, the refrigerant accumulated in the high-pressure line 36, which is the unused line in the cooling operation, is collected, and therefore, the required amount of the refrigerant to be circulated is obtained.

### Sixth embodiment

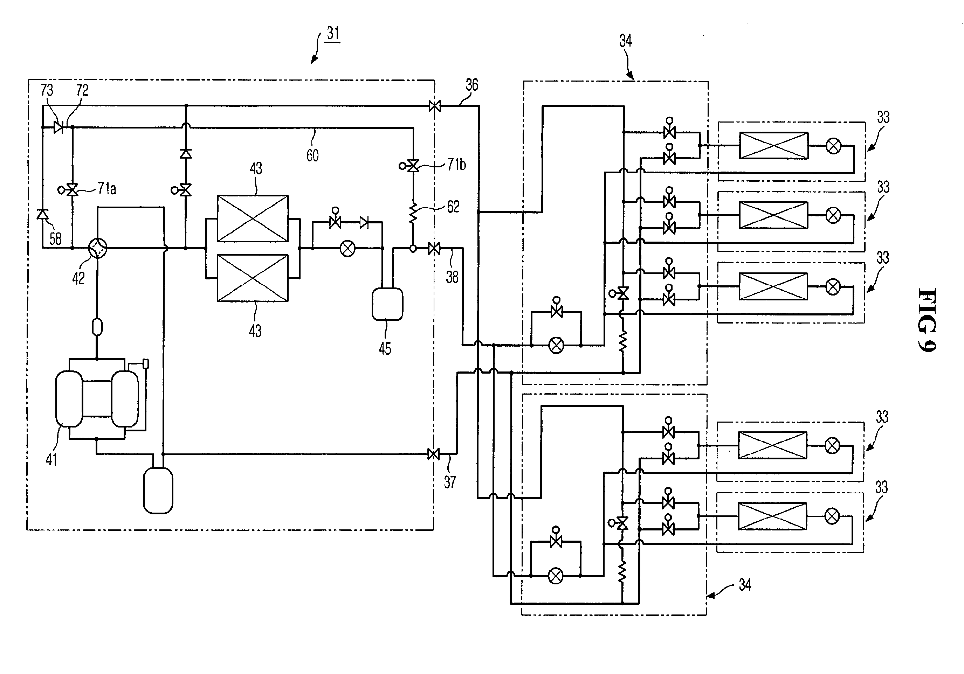

Figure 9 is a view schematically showing the structure of a multiple room air conditioner according to a sixth embodiment of the present invention.

The multiple room air conditioner according to the sixth embodiment of the present invention is identical to the multiple room air conditioner according to the fifth embodiment of the present invention except that the flow rate controlling member 62, such as the capillary tube, as well as the opening/closing valves 71a and 71b are mounted on the bypass line 60.

Since the flow rate controlling member 62 is mounted on the bypass pipe 60, the flow rate of the liquid refrigerant flowing from the indoor units 33 performing the heating operation to the indoor units 33 performing the cooling operation is properly controlled by the flow rate controlling member 62 when the multiple room air conditioner is operated in the simultaneous cooling and heating operation mode and the main heating operation mode. In the cooling operation, the pressure of the liquid refrigerant introduced into the bypass pipe 60 is reduced by the flow rate controlling member 62. In this way, the temperature of the refrigerant can be preliminarily reduced, and therefore, the refrigerant discharge temperature of the compressor 41 can be decreased more effectively in the cooling operation.

The multiple room air conditioner according to the present invention has the following effects.

When the four-way valve is set to form the heating circuit, and the multiple room air conditioner according to the present invention is operated in the simultaneous cooling and heating operation mode, some of the refrigerant discharged from the compressor through the high-pressure gas pipe is bypassed to the liquid pipe at the outdoor heat exchanger side. Consequently, the pressure in the liquid pipe at the outdoor heat exchanger side is increased, and therefore, the liquid refrigerant does not easily flow through the liquid pipe. As a result, it is possible that the liquid refrigerant preferentially flows from the indoor units performing the heating operation to the indoor units performing the cooling operation, and therefore, the required amount of liquid refrigerant flowing to the indoor units 33 performing the cooling operation is obtained without using the pressure sensor to detect the pressure in the refrigerant pipe, which is necessary in the conventional art.

When the four-way valve is set to form the heating circuit, and the multiple room air conditioner is operated in the simultaneous cooling and heating operation mode, i.e., when the multiple room air conditioner is operated in the simultaneous cooling and heating operation mode and the main heating operation mode, the heating capacity is greater than the rated capacity as compared to the cooling capacity. Consequently, the indoor units may intermittently perform the heating operation, i.e., the indoor units performing the heating operation may be repetitively turned on and off, and therefore, the performance loss of the compressor may be increased and pleasantness may be decreased. According to the multiple room air conditioner according to the present invention, however, some of the high-pressure gas discharged from the compressor through the high-pressure gas pipe is bypassed to the liquid pipe at the outdoor heat exchanger side. As a result, some of the high-pressure gas is used to control the flow rate of the liquid refrigerant while some of the heating capacity is reduced. Consequently, the compressor is more efficiently operated with the balanced heating and cooling capacities. At the same time, pleasantness is improved.

## Claims

1. An air conditioner comprising an outdoor unit (32), a plurality of indoor units (33) and an operation mode switching unit (34) for controlling the flow of refrigerant through each indoor unit to enable simultaneous heating and cooling by selected indoor units, wherein high pressure refrigerant flows via a high pressure flow path (36) from the outdoor unit to those indoor units selected to perform a heating operation and subsequently via a liquid flow path (38) back into the outdoor unit, a portion of the refrigerant that has passed through said indoor units to perform a heating operation being diverted from the liquid flow path to those indoor units that have been selected to perform a cooling operation before flowing back into the outdoor unit via a low-pressure flow path (37), **characterised by** a bypass flow path (60) between the high pressure flow path (36) and the liquid flow path (38) for the flow of high pressure refrigerant therethrough to increase the pressure of refrigerant flowing back into the outdoor unit via the liquid flow path that has not been diverted to the indoor units that have been selected to perform a cooling operation, and thereby increase the flow rate of refrigerant diverted from the liquid flow path to the indoor units that have been selected to perform a cooling operation.

2. An air conditioner according to claim 1, comprising a receiver tank (45) in the liquid flow path located downstream from the bypass flow path so that refrigerant flowing back into the outdoor unit via the liquid flow path and refrigerant that has flowed into the liquid flow path via the bypass flow path flows into the receiver tank.

3. An air conditioner according to claim 1 or claim 2, wherein the bypass flow path (38) is configured so that the refrigerant flowing into the liquid flow path from the bypass flow path enters the liquid flow path (36) in a direction opposite to the direction of refrigerant flow through the liquid flow path.

4. An air conditioner according to claim 3, wherein a flow rate control device (61) is disposed in the bypass flow path to control the rate of flow of refrigerant through the bypass flow path.

5. A method of controlling an air conditioner comprising an outdoor unit (32), a plurality of indoor units (33) and an operation mode switching unit (34) for controlling the direction of flow of refrigerant through each indoor unit to enable simultaneous heating and cooling by selected indoor units, wherein high pressure refrigerant flows via a high pressure flow path (36) from the outdoor unit to those indoor units selected to perform a heating operation and subsequently via a liquid flow path (38) back into the outdoor unit, a portion of the refrigerant that has passed through said indoor units to perform a heating operation being diverted from the liquid flow path to those indoor units that have been selected to perform a cooling operation before flowing back into the outdoor unit via a low-pressure flow path, wherein the method is **characterised by** the step of passing high pressure refrigerant through a bypass flow path (60) between the high pressure flow path (36) and the liquid flow path (38) to increase the pressure of refrigerant flowing back into the outdoor unit via the liquid flow path that has not been diverted to the indoor units that have been selected to perform a cooling operation, thereby increasing the flow rate of refrigerant diverted from the liquid flow path to the indoor units that have been selected to perform a cooling operation.

6. A multiple room air conditioner comprising an outdoor unit (32) having a compressor (41), a four-way valve (42), an outdoor heat exchanger (43), and an outdoor expansion valve (44), a plurality of indoor units (33), each having an indoor expansion valve and an indoor heat exchanger and a cooling/heating operation mode switching unit (34) to change refrigerant flow to the indoor units, the outdoor unit being connected to the cooling/heating operation mode switching unit via a high-pressure gas pipe, a low-pressure gas pipe and a liquid pipe, and the cooling/heating operation mode switching unit being connected to the respective indoor units via the gas pipes and the liquid pipe, thereby accomplishing a cooling cycle performing simultaneous cooling and heating operation, wherein when the four-way valve is set to form a heating circuit, and the multiple room air conditioner is operated in the simultaneous cooling and heating operation mode, some of the high-pressure refrigerant discharged from the compressor through the high-pressure gas pipe is bypassed to the liquid pipe at the outdoor heat exchanger side, among the liquid pipe diverging from the indoor units performing heating operation to the outdoor heat exchanger and the indoor units performing cooling operation through a branch part.

7. The air conditioner according to claim 6 wherein when the four-way valve is set to form the heating circuit, and the multiple room air conditioner is operated in the simultaneous cooling and heating operation mode, some of the high-pressure gas discharged from the compressor through the high-pressure gas pipe is bypassed to the liquid pipe between the branch part of the liquid pipe and a receiver tank disposed more adjacent to the outdoor heat exchanger side than the branch part.

8. The air conditioner according to claim 6 or 7 wherein when the four-way valve is set to form the heating circuit, and the multiple room air conditioner is operated in the simultaneous cooling and heating operation mode, some of the high-pressure gas discharged from the compressor through the high-pressure gas pipe is bypassed to the liquid pipe at the outdoor heat exchanger side in the direction opposite to the flow of the refrigerant flowing through the liquid pipe.

9. The air conditioner according to any one of claims 6 to 8 wherein when the four-way valve is set to form the heating circuit, and the multiple room air conditioner is operated in the simultaneous cooling and heating operation mode, some of the high-pressure gas discharged from the compressor through the high-pressure gas pipe is bypassed to the liquid pipe at the outdoor heat exchanger side through a bypass pipe, on which a flow rate controlling member is mounted.

10. The air conditioner according to claim 9 wherein the flow rate controlling member is a variable flow rate controlling member that varies the flow rate of high-pressure gas flowing through the bypass pipe.

11. The air conditioner according to claim 10 wherein when the four-way valve is set to form the heating circuit, and the multiple room air conditioner is operated in the simultaneous cooling and heating operation mode, some of the high-pressure gas discharged from the compressor through the high-pressure gas pipe is bypassed to the liquid pipe at the outdoor heat exchanger side through the bypass pipe, the flow rate of the high-pressure gas flowing through the bypass pipe being controlled by the variable flow rate controlling member according to the cooling/heating operation ratio of the indoor units.

## Patentansprüche

1. Klimagerät mit einer Außeneinheit (32), einer Mehrzahl an Inneneinheiten (33) und einer Betriebsmodusumschalteinheit (34) zum Steuern des Flusses an Kühlmittel durch jede Inneneinheit, um ein gleichzeitiges Heizen und Kühlen durch ausgewählte Inneneinheiten zu ermöglichen, wobei Hochdruckkühlmittel über einen Hockdruckfließweg (36) von der Außeneinheit zu den Inneneinheiten, die zum Durchführen eines Heizbetriebs ausgewählt sind, und anschließend über einen Flüssigfließweg (38) zurück in die Außeneinheit fließt, wobei ein Teil des Kühlmittels, das durch die Inneneinheiten zum Durchführen eines Heizbetriebs geströmt ist, von dem Flüssigfließweg zu den Inneneinheiten, die zum Durchführen eines Kühlbetriebs ausgewählt sind, abgezweigt wird, bevor dieser über einen Niederdruckfließweg (37) zurück in die Außeneinheit fließt,
**gekennzeichnet durch**
einen Bypassfließweg (60) zwischen dem Hochdruckfließweg (36) und dem Flüssigfließweg (38) für den Fluss von Hochdruckkühlmittel hierdurch zum Erhöhen des Druckes des über den Flüssigfließweg zurück in die Außeneinheit fließenden Kühlmittels, das nicht zu den Inneneinheiten, die zum Durchführen eines Kühlbetriebs ausgewählt wurden, abgezweigt wurde, und **dadurch** Erhöhen des Durchflusses an Kühlmittel, welches von dem Flüssigfließweg zu den Inneneinheiten, die zum Durchführen eines Kühlbetriebs ausgewählt wurden, abgezweigt ist.

2. Klimagerät nach Anspruch 1, mit einem Aufnahmetank (45) in dem Flüssigfließweg, welcher stromabwärts von dem Bypassfließweg angeordnet ist, so dass Kühlmittel, welches über den Flüssigfließweg zurück in die Außeneinheit fließt, und Kühlmittel, das über den Bypassfließweg in den Flüssigfließweg geflossen ist, in den Aufnahmetank fließt.

3. Klimagerät nach Anspruch 1 oder Anspruch 2, wobei der Bypassfließweg (38) ausgestaltet ist, so dass das von dem Bypassfließweg in den Flüssigfließweg fließende Kühlmittel in den Flüssigfließweg (36) in eine der Richtung des Kühlmittelflusses durch den Flüssigfließweg entgegengesetzte Richtung eintritt.

4. Klimagerät nach Anspruch 3, wobei in dem Bypassfließweg eine Durchflussregeleinrichtung (61) angeordnet ist zum Regeln der Durchflussmenge an Kühlmittel durch den Bypassfließweg.

5. Verfahren zum Steuern eines Klimageräts mit einer Außeneinheit (32), einer Mehrzahl an Inneneinheiten (33) und einer Betriebsmodusumschalteinheit (34) zum Steuern der Richtung des Flusses an Kühlmittel durch jede Inneneinheit, um ein gleichzeitiges Heizen und Kühlen durch ausgewählte Inneneinheiten zu ermöglichen, wobei Hochdruckkühlmittel über einen Hockdruckfließweg (36) von der Außeneinheit zu den Inneneinheiten, die zum Durchführen eines Heizbetriebs ausgewählt sind, und anschließend über einen Flüssigfließweg (38) zurück in die Außeneinheit fließt, wobei ein Teil des Kühlmittels, das durch die Inneneinheiten zum Durchführen eines Heizbetriebs geströmt ist, von dem Flüssigfließweg zu den Inneneinheiten, die zum Durchführen eines Kühlbetriebs ausgewählt sind, abgezweigt wird, bevor dieser über einen Niederdruckfließweg (37) zurück in die Außeneinheit fließt, wobei das Verfahren
**gekennzeichnet ist durch**
den Schritt des Strömens von Hochdruckkühlmittel **durch** einen Bypassfließweg (60) zwischen dem Hochdruckfließweg (36) und dem Flüssigfließweg (38) zum Erhöhen des Druckes des über den Flüssigfließweg zurück in die Außeneinheit fließenden Kühlmittels, das nicht zu den Inneneinheiten, die zum Durchführen eines Kühlbetriebs ausgewählt wurden, abgezweigt wurde, wodurch der Durchfluss an Kühlmittel, welches von dem Flüssigfließweg zu den Inneneinheiten, die zum Durchführen eines Kühlbetriebs ausgewählt wurden, abgezweigt wird, erhöht wird.

6. Mehrraumklimagerät mit einer Außeneinheit (32) mit einem Kompressor (41), einem Vier-Wege-Ventil (42), einem Außenwärmetauscher (43) und einem Außenexpansionsventil (44), einer Mehrzahl an Inneneinheiten (33), welche jeweils ein Innenexpansionsventil und einen Innenwärmetauscher aufweisen, und einer Kühl/Heiz-Betriebsmodusumschalteinheit (34) zum Ändern des Kühlmittelflusses zu den Inneneinheiten, wobei die Außeneinheit mit der Kühl/Heiz-Betriebsmodusumschalteinheit über eine Hockdruckgasleitung, eine Niederdruckgasleitung und eine Flüssigleitung verbunden ist, und die Kühl/Heiz-Betriebsmodusumschalteinheit mit den entsprechenden Inneneinheiten über die Gasleitungen und die Flüssigleitung verbunden ist, wodurch ein Kühlkreislauf, welcher gleichzeitig einen Kühl- und Heizbetrieb durchführt, erreicht wird, wobei, wenn das Vier-Wege-Ventil zum Bilden eines Heizkreislaufs eingestellt ist und das Mehrraumklimagerät in dem gleichzeitigen Kühl- und Heizbetriebsmodus betrieben wird, etwas von dem von dem Kompressor durch die Hochdruckgasleitung geförderten Kühlmittel zu der Flüssigleitung an der Seite des Außenwärmetauschers umgeleitet wird, bei der Flüssigleitung, welche von den den Heizbetrieb durchführenden Inneneinheiten zu dem Außenwärmetauscher und den den Kühlbetrieb durchführenden Inneneinheiten durch einen Zweigteil abzweigt.

7. Klimagerät nach Anspruch 6, wobei, wenn das Vier-Wege-Ventil zur Bildung des Heizkreislaufs eingestellt ist und das Mehrraumklimagerät in dem gleichzeitigen Kühl- und Heizbetriebsmodus betrieben wird, etwas von dem Hochdruckgas, welches von dem Kompressor durch die Hochdruckgasleitung gefördert ist, zu der Flüssigleitung zwischen dem Zweigteil der Flüssigleitung und einem Aufnahmetank, welcher näher an dem Außenwärmetauscher als an dem Zweigteil angeordnet ist, umgeleitet wird.

8. Klimagerät nach Anspruch 6 oder 7, wobei, wenn das Vier-Wege-Ventil zur Bildung des Heizkreislaufs eingestellt ist und das Mehrraumklimagerät in dem gleichzeitigen Kühl- und Heizbetriebsmodus betrieben wird, etwas von dem Hochdruckgas, welches von dem Kompressor durch die Hochdruckgasleitung gefördert ist, zu der Flüssigleitung an der Seite des Außenwärmetauschers in die dem Fluss des Kühlmittels, welches durch die Flüssigleitung fließt, entgegengesetzte Richtung umgeleitet wird.

9. Klimagerät nach einem der Ansprüche 6 bis 8, wobei, wenn das Vier-Wege-Ventil zur Bildung des Heizkreislaufs eingestellt ist und das Mehrraumklimagerät in dem gleichzeitigen Kühl- und Heizbetriebsmodus betrieben wird, etwas von dem Hochdruckgas, welches von dem Kompressor durch die Hochdruckgasleitung gefördert ist, zu der Flüssigleitung an der Seite des Außenwärmetauschers durch eine Bypassleitung, an welcher ein Durchflussregelglied angeordnet ist, umgeleitet wird.

10. Klimagerät nach Anspruch 9, wobei das Durchflussregelglied ein variables Durchflussregelglied ist, welches den Durchfluss des Hochdruckgases durch die Bypassleitung variiert.

11. Klimagerät nach Anspruch 10, wobei, wenn das Vier-Wege-Ventil zur Bildung des Heizkreislaufs eingestellt ist und das Mehrraumklimagerät in dem gleichzeitigen Kühl- und Heizbetriebsmodus betrieben wird, etwas von dem Hochdruckgas, welches von dem Kompressor durch die Hochdruckgasleitung gefördert ist, zu der Flüssigleitung an der Seite des Außenwärmetauschers durch die Bypassleitung umgeleitet wird, wobei der Durchfluss des Hochdruckgases, welches durch die Bypassleitung fließt, entsprechend dem Kühl/Heiz-Betriebsmodusverhältnis der Inneneinheiten durch das variable Durchflussregelglied geregelt wird.

## Revendications

1. Climatiseur comprenant une unité extérieure (32), une pluralité d'unités intérieures (33) et une unité (31) de commutation de mode de fonctionnement destiné à réguler le flux de liquide frigorigène à travers chaque unité intérieure pour permettre le chauffage et le refroidissement simultanés par des unités intérieures sélectionnées, dans lequel le liquide frigorigène de pression élevée circule en passant par une voie (36) d'écoulement de pression élevée de l'unité extérieure aux unités intérieures sélectionnées pour exécuter une opération de chauffage et reflue ultérieurement par une voie (38) d'écoulement de liquide dans l'unité intérieure, une partie du liquide frigorigène qui est passé à travers lesdites unités intérieures pour exécuter une opération de chauffage étant déviée de la voie d'écoulement de liquide vers les unités intérieures qui ont été sélectionnées pour exécuter une opération de refroidissement avant de refluer dans l'unité extérieure par une voie (37) d'écoulement de basse pression, **caractérisé par** une voie (60) d'écoulement de dérivation entre la voie (36) d'écoulement de pression élevée et la voie (38) d'écoulement de liquide pour l'écoulement de liquide frigorigène de pression élevée à travers celle-ci afin d'augmenter la pression du liquide frigorigène refluant dans l'unité extérieure en passant par la voie d'écoulement de liquide qui n'a pas été déviée vers les unités intérieures qui ont été sélectionnées pour exécuter une opération de refroidissement, et augmenter ainsi le débit d'écoulement du liquide frigorigène dévié de la voie d'écoulement de liquide vers les unités intérieures qui ont été sélectionnées pour exécuter une opération de refroidissement.

2. Climatiseur selon la revendication 1, comprenant un réservoir (45) de réception dans la voie d'écoulement de liquide situé en aval de la voie d'écoulement de dérivation de sorte que le liquide frigorigène refluant dans l'unité extérieure en passant par la voie d'écoulement de liquide et le liquide frigorigène qui s'est écoulé dans la voie d'écoulement de liquide en passant par la voie d'écoulement de dérivation s'écoulent dans le réservoir de réception.

3. Climatiseur selon la revendication 1 ou la revendication 2, dans lequel la voie (78) d'écoulement de dérivation est configurée de manière à ce que le liquide frigorigène s'écoulant dans la voie d'écoulement de liquide en provenance de la voie d'écoulement de dérivation entre dans la voie (36) d'écoulement de liquide dans une direction opposée à la direction d'écoulement du liquide frigorigène à travers la voie d'écoulement de liquide.

4. Climatiseur selon la revendication 3, dans lequel un dispositif (61) de régulation de débit d'écoulement disposé dans la voie d'écoulement de dérivation pour réguler le débit d'écoulement de liquide frigorigène à travers la voie d'écoulement de dérivation.

5. Procédé de commande d'un climatiseur comprenant une unité extérieure (32), une pluralité d'unités intérieures (33) et une unité (34) de commutation de mode de fonctionnement pour réguler la direction d'écoulement de liquide frigorigène à travers chaque unité intérieure pour permettre le chauffage et le refroidissement simultanés par des unités intérieures sélectionnées, dans lequel du liquide frigorigène de pression élevée circule en passant par une voie (36) d'écoulement de pression élevée de l'unité extérieure dans les unités intérieures sélectionnées pour exécuter une opération de chauffage et ultérieurement en passant par une voie (38) d'écoulement de liquide reflue dans l'unité extérieure, une partie du liquide frigorigène qui est passé à travers lesdites unités intérieures pour exécuter une opération de chauffage étant déviée de la voie d'écoulement de liquide vers les unités intérieures qui ont été sélectionnées pour exécuter une opération de refroidissement avant de refluer dans l'unité extérieure en passant par une voie d'écoulement à basse pression, dans lequel le procédé est **caractérisé par** l'étape consistant à faire passer le liquide frigorigène de pression élevée à travers une voie (60) d'écoulement de dérivation entre la voie (36) d'écoulement de pression élevée et la voie (38) d'écoulement de liquide pour augmenter la pression de liquide frigorigène refluant dans l'unité extérieure en passant par la voie d'écoulement de liquide qui n'a pas été dévié vers les unités intérieures qui ont été sélectionnées pour exécuter une opération de refroidissement, augmentant ainsi le débit d'écoulement de liquide frigorigène dévié de la voie d'écoulement de liquide vers les unités intérieures qui ont été sélectionnées pour exécuter une opération de refroidissement.

6. Climatiseur pour pièces multiples comprenant une unité extérieure (32) ayant un compresseur (41), une vanne à quatre voies (42), un échangeur (43) de chaleur extérieur, et une soupape (44) de détente extérieure, une pluralité d'unités intérieures (33), chacun ayant une soupape de détente intérieure et un échangeur de chaleur intérieur et une unité (34) de commutation de mode de fonctionnement refroidissement-chauffage pour modifier l'écoulement de liquide frigorigène vers les unités intérieures, l'unité extérieure étant reliée à l'unité de commutation de mode de fonctionnement refroidissement-chauffage par un tuyau pour gaz à haute pression, un tuyau pour gaz à basse pression et une conduite de liquide, l'unité de commutation de mode de fonctionnement refroidissement-chauffage étant reliée aux unités intérieures respectives par les tuyaux de gaz et la conduite de liquide, accomplissant ainsi un cycle de refroidissement en exécutant simultanément une opération de refroidissement et de chauffage, dans lequel quand la vanne à quatre voies est réglée pour former un circuit de chauffage, et que le climatiseur pour pièces multiples fonctionne dans le mode de fonctionnement de refroidissement et de chauffage simultanés, une partie du liquide frigorigène de pression élevée évacuée du compresseur à travers le tuyau pour gaz à haute pression est dérivée vers la conduite de liquide côté de l'échangeur de chaleur extérieur, parmi la conduite de liquide s'écartant des unités intérieures exécutant une opération de chauffage vers l'échangeur de chaleur extérieur et les unités intérieures exécutant une opération de refroidissement à travers une partie de branchement.

7. Climatiseur selon la revendication 6, dans lequel quand la vanne à quatre voies est réglée pour former le circuit de chauffage, et que le climatiseur pour pièces multiples fonctionne dans le mode de fonctionnement de refroidissement et de chauffage simultanés, une partie du gaz à haute pression évacuée du compresseur à travers le tuyau pour gaz à haute pression est dérivée vers la conduite de liquide entre la partie de branchement de la conduite de liquide et un réservoir de réception disposé de manière plus adjacente au côté de l'échangeur de chaleur extérieur que la partie de branchement.

8. Climatiseur selon la revendication 6 ou la revendication 7, dans lequel quand la vanne à quatre voies est réglée pour former le circuit de chauffage, et que le climatiseur pour pièces multiples fonctionne dans le mode de fonctionnement de refroidissement et de chauffage simultanés, une partie du gaz à haute pression évacuée du compresseur à travers le tuyau pour gaz à haute pression est dérivée vers la conduite de liquide côté échangeur de chaleur extérieur dans la direction opposée à l'écoulement du liquide frigorigène s'écoulant à travers la conduite de liquide.

9. Climatiseur selon l'une quelconque des revendications 6 à 8, dans lequel quand la vanne à quatre voies est réglée pour former le circuit de chauffage, et que le climatiseur pour pièces multiples fonctionne dans le mode de fonctionnement de refroidissement et de chauffage simultanés, une partie du gaz à haute pression évacuée du compresseur à travers le tuyau pour gaz à haute pression est dérivée vers la conduite de liquide côté échangeur de chaleur extérieur à travers une conduite de dérivation, sur lequel est monté un élément de régulation de débit d'écoulement.

10. Climatiseur selon la revendication 9 dans lequel l'élément de régulation de débit d'écoulement est un élément de régulation à débit d'écoulement variable qui fait varier le débit d'écoulement de gaz à haute pression s'écoulant à travers la conduite de dérivation.

11. Climatiseur selon la revendication 10 dans lequel quand la vanne à quatre voies est réglée pour former le circuit de chauffage, et que le climatiseur pour pièces multiples fonctionne dans le mode de fonctionnement de refroidissement et de chauffage simultanés, une partie du gaz à haute pression évacuée du compresseur à travers le tuyau pour gaz à haute pression est dérivée vers la conduite de liquide côté échangeur de chaleur extérieur à travers la conduite de dérivation, le débit d'écoulement du gaz à haute pression circulant à travers la conduite de dérivation étant régulé par l'élément de régulation de débit d'écoulement variable selon le rapport de fonctionnement de refroidissement-chauffage des unités intérieures.
